# EUROPEAN PATENT SPECIFICATION

(11) **EP 2 925 007 B1**
(45) Date of publication and mention of the grant of the patent: **26.06.2019**
(21) Application number: 13856533.8
(22) Date of filing: 11.11.2013
(51) Int. Cl.: H04N 21/435, H04N 21/436, G06F 21/16

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS, ET PROCÉDÉ DE TRAITEMENT D'INFORMATIONS

(30) Priority: 23.11.2012 US 201261729510 P
(43) Date of publication of application: 30.09.2015
(73) Proprietor: Saturn Licensing LLC, New York, NY 10022-3211 (US)
(72) Inventor: NAKAMURA Hitoshi, Tokyo 108-0075 (JP); YAMAGISHI Yasuaki, Tokyo 108-0075 (JP)
(74) Representative: Witte, Weller & Partner Patentanwälte mbB
(86) International application number: PCT/JP2013/080388
(87) International publication number: WO 2014/080783

(56) References cited:
- WO-A1-01/52178
- JP-A- 2007 208 375
- JP-A- 2012 168 801
- JP-A- 2012 182 779

## Description

### TECHNICAL FIELD

The present disclosure relates to information processing devices and information processing methods, and more particularly, to an information processing device and an information processing method that are suitable in a case where an application program is executed in conjunction with reproduction of content such as a television program.

### BACKGROUND ART

Information (about the cast, the outline, the trailer, or the like) related to a TV (television) program being aired, and information (such as news, weather forecasts, or traffic information) that is not related directly to the TV program (hereinafter referred to as the television program) but is useful for viewers can be displayed on the screens for the benefit of the viewers of the television program, for example.

So as to realize this, a command for acquiring and executing a special-purpose application program (hereinafter referred to simply as the application) is transmitted to a TV receiver or the like in conjunction with progress of the television program. In regions such as Japan and Europe, this has already been realized by transmitting the command and the application using the band for data broadcasting with TV broadcast signals (see Patent Document 1, for example).

In the United States, on the other hand, any data broadcast band has not been set for TV broadcast signals, and any substitute method has not been established. Therefore, an application cannot be executed in conjunction with progress of a television program.

In the United States, the number of households viewing television programs via CATV or IPTV or the like is larger than the number of households viewing television programs by directly receiving TV broadcast waves with a TV receiver. With CATV or IPTV, there are cases where only the signals of images and sound of a television program are extracted from TV broadcast signals and are distributed. Therefore, even if a data broadcast band is set for TV broadcast signals in the United States, there is no guarantee that data broadcast signals including the data of applications will be transmitted to receiving devices.

Furthermore, there is a demand these days for execution of an application in conjunction with desired content that is not necessarily a television program being aired in a case where content such as a recorded television program, a video reproduced from a packaged medium such as a DVD or a BD, or a moving image downloaded from the Internet is being viewed.

To satisfy this demand, the content being viewed needs to be identified. As a method for realizing this, there are the ACR (Automatic Content Recognition) technology and ACR services using the ACR technology (see Patent Document 2, for example).

An ACR service is realized by an ACR client and an ACR server. The ACR client mounted on a TV receiver or the like extracts signature data (such as a watermark or a fingerprint) from the currently-viewed content, notifies the ACR server of the signature data, and requests identification of the content. The ACR server compares the received signature data with the signature data of content registered beforehand in a database, and identifies the content being viewed with a TV receiver or the like. Further, the metadata related to the identified content and the application (hereinafter referred to simply as the linked application) to be executed in conjunction with the content is returned as an ACR response to the ACR client.

The ACR client that has received the response acquires the linked application from a predetermined server, and executes the linked application.

In WO 01/52178 A1 steganographic embedder is disclosed that associates data with a media signal by encoding the data, a link to the data, or a combination of both into the media signal. The embedder may be located in a media signal capture device or an external process or device. In one application, for example, an embedder process steganographically encodes data into a media signal as part of the process of uploading the media signal from the media signal capture device to an external device. In another application, a media signal capture device includes a steganographic embedder that encodes data or a link to external metadata into the media signal at the time of recording.

### CITATION LIST

### PATENT DOCUMENT

Patent Document 1: Japanese Patent Application Laid-Open No. 2006-50237
Patent Document 2: Japanese Patent Application Laid-Open No. 2012-168801

### SUMMARY OF THE INVENTION

### PROBLEMS TO BE SOLVED BY THE INVENTION

In a case where the above described ACR service is realized, the ACR service needs to be managed while the rights of the respective holders of copyrights to the content and the linked application are respected. A method of protecting copyrights has been set for television broadcast programs and content of packaged media or the like.

However, any method has not been established to protect copyrights to content related to ACR services and the corresponding linked applications in a forceful manner. Also, there are cases where the holders of copyrights to content and the corresponding linked application are different, and an ACR service that starts the linked application in a manner unintended by the holder of the copyright to the content might be performed. In view of this, there is an urgent need to establish a method of protecting copyrights to content and the corresponding linked applications in a forceful manner and rules for managing the linked applications in the market.

Some content copyright holders have started insisting copyrights not only to content but also to the signature data extracted from the content. In an ACR service in this case, the signature data extracted from content is used without permission from the holder of the copyright to the content, and the problem of infringement of the right of the content's copyright holder might be caused.

The present disclosure is made in view of those circumstances, and aims to realize ACR services without any infringement of the rights of the respective holders of copyrights to content and linked applications.

### SOLUTIONS TO PROBLEMS

An information processing device as a first aspect of the present disclosure includes: a content managing unit that manages first content viewable on the side of a content reproduction device that reproduces content; a database unit that generates reference data and turns the generated reference data into a database, the reference data being generated by associating first signature data extracted from the first content with a content identifier and at least one of right management information about the first signature data, and an application identifier and rendering control information, the content identifier representing the first content from which the first signature data is extracted, the application identifier representing an application to be executed on the side of the content reproduction device in conjunction with progress of the first content when the first content is being viewed on the side of the content reproduction device, the rendering control information being for controlling rendering of the application, the first signature data indicating the features of the first content; and an identifying unit that identifies the content and returns a response indicating an identification result by referring to the reference data of the database unit in reply to a query including second signature data extracted from second content being viewed by the user of the content reproduction device, the second signature data indicating the features of the second content.

The first signature data of the reference data may be encrypted, and the database unit may decrypt the encrypted first signature data through an authentication process with the content managing unit.

The right management information about the first signature data may include an item for selecting an existing right management method for the first signature data.

The right management information about the first signature data may further include an item for arbitrarily setting a right management method for the first signature data.

An information processing method as the first aspect of the present disclosure is an information processing method implemented in an information processing device, and includes: a database forming step of generating reference data and turning the generated reference data into a database, the reference data being generated by associating first signature data extracted from first content with right management information about the first signature data and the content identifier representing the first content from which the first signature data is extracted, the first content being viewable on the side of a content reproduction device that reproduces content, the first signature data indicating the features of the first content; and an identifying step of identifying the content and returning a response indicating an identification result by referring to the reference data of the database in reply to a query including second signature data extracted from second content being viewed by the user of the content reproduction device, the query being transmitted from the side of the content reproduction device, the second signature data indicating the features of the second content,
the database forming step and the identifying step being carried out by the information processing device.

In the first aspect of the present disclosure, the reference data is generated by associating the first signature data extracted from the first content with the right management information about the first signature data and the content identifier representing the first content from which the first signature data is extracted, and the generated reference data is turned into a database. The first content is viewable on the side of the content reproduction device that reproduces content, and the first signature data indicates the features of the first content. Also, in reply to the query including the second signature data extracted from the second content being viewed by the user of the content reproduction device, the content is identified by referring to the reference data of the database, and a response indicating an identification result is returned. The query is transmitted from the side of the content reproduction device, and the second signature data indicates the features of the second content.

A first information processing device in a second aspect of the present disclosure includes: a content managing unit that manages first content viewable on the side of a content reproduction device that reproduces content; a database unit that generates reference data and turns the generated reference data into a database, the reference data being generated by associating first signature data extracted from the first content with a content identifier, an application identifier, and rendering control information, the content identifier representing the first content from which the first signature data is extracted, the application identifier representing the application to be executed on the side of the content reproduction device in conjunction with progress of the first content when the first content is being viewed on the side of the content reproduction device, the rendering control information being for controlling rendering of the application, the first signature data indicating the features of the first content; and an identifying unit that identifies the content and returns a response indicating an identification result by referring to the reference data of the database unit in reply to a query including second signature data extracted from second content being viewed by the user of the content reproduction device, the query being transmitted from the side of the content reproduction device, the second signature data indicating the features of the second content.

The rendering control information may include at least one of an item for limiting the device serving as the destination of output of an image from the application, and/or an item for restricting superimposition of an image from the application and an image of the content.

A first information processing method in the second aspect of the present disclosure is an information processing method implemented in an information processing device, and includes: a database forming step of generating reference data and turning the generated reference data into a database, the reference data being generated by associating first signature data extracted from first content with a content identifier, an application identifier, and rendering control information, the content identifier representing the first content from which the first signature data is extracted, the application identifier representing the application to be executed on the side of a content reproduction device in conjunction with progress of the first content when the first content is being viewed on the side of the content reproduction device, the rendering control information being for controlling rendering of the application, the first content being viewable on the side of the content reproduction device that reproduces content, the first signature data indicating the features of the first content; and an identifying step of identifying the content and returning a response indicating an identification result by referring to the reference data of the database in reply to a query including second signature data extracted from second content being viewed by the user of the content reproduction device, the query being transmitted from the side of the content reproduction device, the second signature data indicating a feature of the second content,
the database forming step and the identifying step being carried out by the information processing device.

A second information processing device in the second aspect of the present disclosure includes: a query generating unit that extracts signature data from the content being reproduced, generates a query including the signature data, transmits the query to an identification server, and receives a response returned from the identification server in reply to the query, the signature data indicating the features of the content; and an application executing unit that acquires and executes an application based on the application identifier included in the received response, and controls rendering of the application based on rendering control information about the application, the application being designated to be executed in conjunction with progress of the content being reproduced, the rendering control information being included in the response.

Based on the rendering control information, the application executing unit may perform at least one of a process for limiting the device serving as the destination of output of an image from the application, and/or a process for restricting superimposition of an image from the application and an image of the content.

A second information processing method in the second aspect of the present disclosure is an information processing method implemented in an information processing device, and includes: a transmitting step of extracting signature data from the content being reproduced, generating a query including the signature data, and transmitting the query to an identification server, the signature data indicating the features of the content; a receiving step of receiving a response returned from the identification server in reply to the query; and a controlling step of acquiring and executing an application based on the application identifier included in the received response, and controlling rendering of the application based on rendering control information about the application, the application being designated to be executed in conjunction with progress of the content being reproduced, the rendering control information being included in the response,
the transmitting step, the receiving step, and the controlling step being carried out by the information processing device.

In the second aspect of the present disclosure, the first information processing device generates reference data and turns the generated reference data into a database by associating the first signature data extracted from the first content with a content identifier, an application identifier, and rendering control information, the content identifier representing the first content from which the first signature data is extracted, the application identifier representing the application to be executed on the side of the second information processing device in conjunction with progress of the first content when the first content is being viewed on the side of the second information processing device, the rendering control information being for controlling rendering of the application, the first content being viewable on the side of the second information processing device that reproduces content, the first signature data indicating the features of the first content. The first information processing device identifies the content and returns a response indicating an identification result by referring to the reference data of the database unit in reply to a query including the second signature data extracted from the second content being viewed by the user of the second information processing device, the query being transmitted from the side of the second information processing device, the second signature data indicating the features of the second content. Meanwhile, the second information processing device generates the query, transmits the query to the first information processing device, receives the response returned from the first information processing device in reply to the query, acquires and executes the application based on the application identifier included in the received response, and controls rendering of the application based on the rendering control information about the application, the application being designated to be executed in conjunction with progress of the content being reproduced, the rendering control information being included in the response.

A first information processing device in a third aspect of the present disclosure includes: a content managing unit that manages first content viewable on the side of a content reproduction device that reproduces content; a database unit that generates reference data and turns the generated reference data into a database, the reference data being generated by associating first signature data extracted from the first content with a content identifier, an application identifier, and right management information about an application, the content identifier representing the first content from which the first signature data is extracted, the application identifier representing the application to be executed on the side of the content reproduction device in conjunction with progress of the first content when the first content is being viewed on the side of the content reproduction device, the first signature data indicating the features of the first content; and an identifying unit that identifies the content and returns a response indicating an identification result by referring to the reference data of the database unit in reply to a query including second signature data extracted from second content being viewed by the user of the content reproduction device, the query being transmitted from the side of the content reproduction device, the second signature data indicating the features of the second content.

The right management information about the application may include an item for selecting an existing right management method for the application and content cited by the application.

The right management information about the application may further include an item for arbitrarily setting a right management method for the application and the content cited by the application.

A first information processing method in the third aspect of the present disclosure is an information processing method implemented in an information processing device, and includes: a database forming step of generating reference data and turning the generated reference data into a database, the reference data being generated by associating first signature data extracted from first content with a content identifier, an application identifier, and right management information about an application, the content identifier representing the first content from which the first signature data is extracted, the application identifier representing the application to be executed on the side of a content reproduction device in conjunction with progress of the first content when the first content is being viewed on the side of the content reproduction device, the first content being viewable on the side of the content reproduction device that reproduces content, the first signature data indicating the features of the first content; and an identifying step of identifying the content and returning a response indicating an identification result by referring to the reference data of the database unit in reply to a query including second signature data extracted from second content being viewed by the user of the content reproduction device, the query being transmitted from the side of the content reproduction device, the second signature data indicating the features of the second content,
the database forming step and the identifying step being carried out by the information processing device.

A second information processing device in the third aspect of the present disclosure includes: a query generating unit that extracts signature data from the content being reproduced, generates a query including the signature data, transmits the query to an identification server, and receives a response returned from the identification server in reply to the query, the signature data indicating the features of the content; and an application executing unit that acquires and executes an application based on the application identifier included in the received response, and manages the application and the content cited by the application based on right management information about the application, the application being designated to be executed in conjunction with progress of the content being reproduced, the right management information being included in the response.

The application executing unit may decrypt the application based on the right management information, the application being encrypted.

The application executing unit may manage copying of the application and the cited content based on the right management information.

A second information processing method in the third aspect of the present disclosure is an information processing method implemented in an information processing device, and includes: a transmitting step of extracting signature data from the content being reproduced, generating a query including the signature data, and transmitting the query to an identification server, the signature data indicating the features of the content; a receiving step of receiving a response returned from the identification server in reply to the query; and a managing step of acquiring and executing an application based on the application identifier included in the received response, and managing the application and the content cited by the application based on right management information about the application, the application being designated to be executed in conjunction with progress of the content being reproduced, the right management information being included in the response,
the transmitting step, the receiving step, and the managing step being carried out by the information processing device.

In the third aspect of the present disclosure, the first information processing device generates reference data and turns the generated reference data into a database by associating the first signature data extracted from the first content with a content identifier, an application identifier, and the right management information about the application, the content identifier representing the first content from which the first signature data is extracted, the application identifier representing the application to be executed on the side of the second information processing device in conjunction with progress of the first content when the first content is being viewed on the side of the second information processing device, the first content being viewable on the side of the second information processing device that reproduces content, the first signature data indicating the features of the first content. The first information processing device identifies the content and returns a response indicating an identification result by referring to the reference data of the database unit in reply to a query including the second signature data extracted from the second content being viewed by the user of the second information processing device, the query being transmitted from the side of the second information processing device, the second signature data indicating the features of the second content. Meanwhile, the second information processing device generates the query, transmits the query to the first information processing device, receives the response returned from the first information processing device in reply to the query, acquires and executes the application based on the application identifier included in the received response, and manages the application and the content cited by the application based on the right management information about the application, the application being designated to be executed in conjunction with progress of the content being reproduced, the right management information being included in the response.

### EFFECTS OF THE INVENTION

According to the first aspect of the present disclosure, ACR services using unauthorized signature data can be prevented.

According to the second aspect of the present disclosure, rendering of the application to be executed in conjunction with progress of content can be restricted.

According to the third aspect of the present disclosure, infringement of the right to the application to be executed in conjunction with progress of content and the right to the cited content can be prevented.

### BRIEF DESCRIPTION OF DRAWINGS

Fig. 1 is a block diagram showing an example configuration of an application linkage system as an embodiment of the present disclosure.
Fig. 2 is a block diagram showing an example structure of the ACR server.
Fig. 3 is a block diagram showing an example structure of the ACR client.
Fig. 4 is a diagram showing the data structure of ACR reference data.
Fig. 5 is a diagram showing the data structure of signature data copy control information (SCM).
Fig. 6 is a diagram showing the data structure of linked application rendering information (ARM).
Fig. 7 is a diagram showing the data structure of linked application copy control information (ACM).
Fig. 8 is a diagram showing the data structure of an ACR query.
Fig. 9 is a diagram showing the data structure of an ACR response.
Fig. 10 is a flowchart for explaining operation of the application linkage system.
Fig. 11 is a flowchart for explaining operation of the application linkage system.
Fig. 12 is a block diagram showing an example structure of a computer.

### MODES FOR CARRYING OUT THE INVENTION

The following is a detailed description of best modes for carrying out the present disclosure (hereinafter referred to as embodiments), with reference to the drawings.

### [Example Configuration of an Application Linkage System]

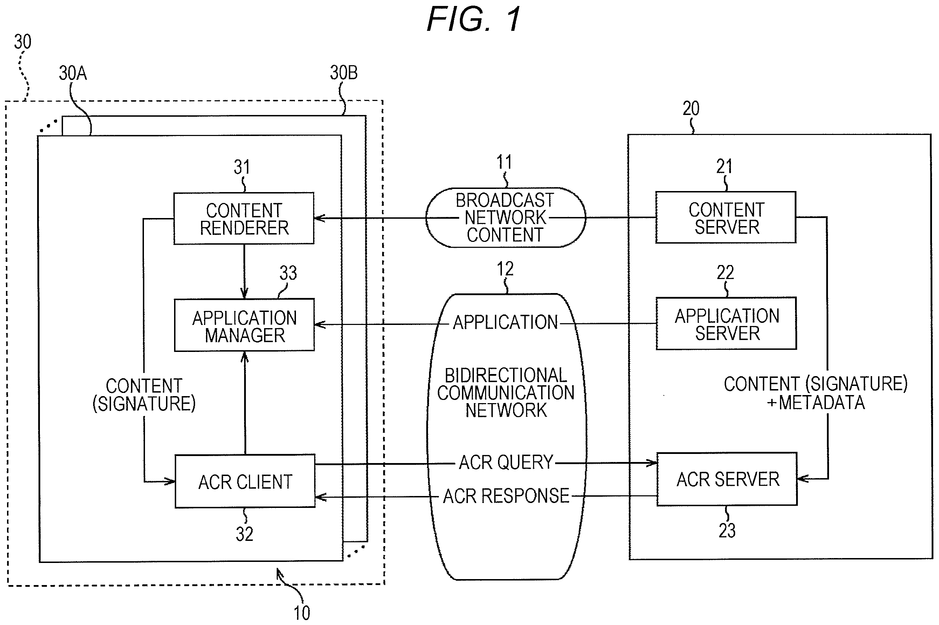

Fig. 1 shows an example configuration of an application linkage system as an embodiment of the present disclosure.

This application linkage system 10 identifies the content a user is viewing on the screen of a TV receiver or the like, and executes an application (hereinafter referred to as the linked application) in conjunction with progress of the content.

Here, the content is not limited to a television program being aired and received by a TV receiver or the like. Examples of the content include various kinds of audio/visual content such as a television program recorded by a video recorder or the like, a video such as a movie reproduced from a packaged medium, and a moving image downloaded via the Internet. The content may also include commercial messages (hereinafter referred to as CMs) inserted between television programs or into a television program.

The linked application can display the information related to the content being viewed, such as the summary of the content and the metadata of the cast, or introduce a shopping site where the products shown in the images of the content (the clothes the cast members are wearing, or the items being used by the cast members) can be purchased. The linked application can also guide the user to downloading and viewing other content related to the current content. The other content to which the user is guided by the linked application in this case is referred to as the cited content.

In identifying content, the ACR technology is used. By the ACR technology, the content being viewed is identified through a comparison between the signature data (feature amount) periodically extracted from the content being viewed and the signature data of the content registered beforehand in a database.

The application linkage system 10 is formed with a provider system 20 located on a side that supplies content and linked applications, and a home network system 30 located in the user's home or the like. The provider system 20 and the home network system 30 are connected to each other via a broadcast network 11 and a bidirectional communication network 12.

The broadcast network 11 may be a TV broadcast network, a CATV network, an IPTV network, or the like. The bidirectional communication network 12 indicates an IP communication network that is typically the Internet.

The home network system 30 is formed by connecting a primary screen device 30A and a second screen device 30B with a wireless LAN, for example. The primary screen device 30A is formed with a TV receiver or the like having a broadcast reception tuner function. The second screen device 30B is formed with a portable terminal device not having a broadcast reception tuner function, such as a portable telephone device, a smartphone, a tablet computer, or a slate PC. A portable terminal device having a broadcast reception tuner function may be used as the second screen device 30B.

### [Description of the Provider System 20]

The provider system 20 is formed with a content server 21, an application server 22, and an ACR server 23.

The content server 21 broadcasts content such as television programs and CMs via the broadcast network 11. The content server 21 also supplies the broadcast content and the metadata corresponding to the broadcast content, to the ACR server 23.

The metadata includes the signature data of the content, signature data copy control information that is the copyright information about the signature data, the identifier of the corresponding linked application, linked application rendering information for restricting the rendering destinations of the linked application, linked application copy control information that is the copyright information about the linked application, and the like.

Hereinafter, the signature data copy control information will be referred to simply as the SCM (Signature data Copy Management) information. The linked application rendering information will be referred to simply as the ARM (linked Application Rendering Management) information. The linked application copy control information will be referred to simply as the ACM (linked Application Copy Management) information.

In response to a request from the side of the home network system 30, the application server 22 supplies a linked application and the data to be used by the linked application via the bidirectional communication network 12. Here, the linked application and the data to be used by the linked application may be encrypted by the DRM (Digital Rights Management) technology.

The ACR server 23 holds a database that is prepared beforehand and contains ACR reference data that associates the signature data extracted at predetermined sampling intervals from various kinds of content to be viewed on the side of the home network system 30, with content identifiers, application identifiers, signature data copy control information, linked application rendering information, linked application copy control information, and the like.

Based on the database of the ACR reference data, the ACR server 23 generates and returns an ACR response in reply to an ACR query transmitted from an ACR client 32 on the side of the home network system 30.

The content server 21, the application server 22, and the ACR server 23 constituting the provider system 20 may be placed at one location, or may be dispersed at different locations. The content server 21, the application server 22, and the ACR server 23 may be combined as appropriate. Furthermore, there may be more than one content server 21, more than one application server 22, and more than one ACR server 23.

### [Description of the Home Network System 30]

The primary screen device 30A of the home network system 30 includes a content renderer 31, the ACR client 32, and an application manager 33. The second screen device 30B includes the same components as above.

The content renderer 31 acquires and divides all the content to be displayed on the display of a TV receiver or the like serving as the primary screen device 30A, and supplies the content to the ACR client 32. That is, the content renderer 31 acquires and divides not only the content broadcast from the content server 21 but also the content that is input via various input terminals (such as HDMI (registered trademark) terminals) of a TV receiver or the like, and supplies the content to the ACR client 32.

The ACR client 32 extracts signature data indicating the features of content at predetermined sampling intervals from the content that is input from the content renderer 31. Here, the signature data extraction method is the same as the extraction method (described later) used by the ACR server 23 of the provider system 20.

The ACR client 32 also generates an ACR query including the extracted signature data, and transmits the ACR query to the ACR server 23 of the provider system 20 via the bidirectional communication network 12. The ACR client 32 also receives and holds an ACR response returned from the ACR server 23 in reply to the transmitted ACR query. The ACR client 32 further analyzes the held ACR response, transfers the linked application rendering information and the linked application copy control information corresponding to the content being viewed to the application manager 33, and causes the application manager 33 to execute the linked application in conjunction with the progress of the content.

Based on related metadata, the linked application copy control information, the linked application rendering information, and the like supplied from the ACR client 32, the application manager 33 acquires the linked application corresponding to the content being viewed from the application server 22 via the bidirectional communication network 12, and executes the linked application.

In accordance with the linked application rendering information, the application manager 33 can set not only the primary screen device 30A but also the second screen device 30B (as will be described later in detail) as the rendering destination of the linked application (or the destination of image display by the linked application).

### [Specific Example Structure of the ACR Server 23]

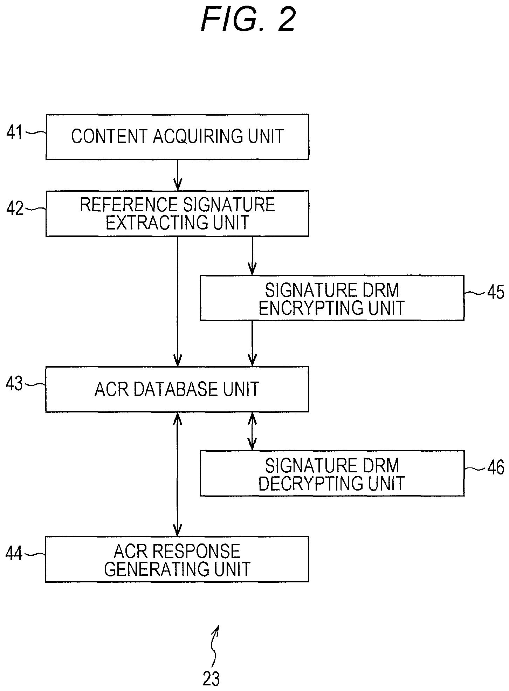

Fig. 2 shows a specific example structure of the ACR server 23 included in the provider system 20.

The ACR server 23 is formed with a content acquiring unit 41, a reference signature extracting unit 42, an ACR database unit 43, an ACR response generating unit 44, a signature DRM encrypting unit 45, and a signature DRM decrypting unit 46.

The content acquiring unit 41 acquires, from the content server 21, content to be broadcast by the content server 21 via the broadcast network 11 and the metadata (including related metadata, SCM information, ARM information, ACM information, and the like) corresponding to the content, and supplies the acquired content to the reference signature extracting unit 42. The content acquiring unit 41 also acquires, from outside, various kinds of content to be viewed on the side of the home network system 30 and the metadata corresponding to the content, and supplies the content and the metadata to the reference signature extracting unit 42.

Using a predetermined extraction method, the reference signature extracting unit 42 extracts the signature data indicating the features of the content at predetermined sampling intervals from the content supplied from the content acquiring unit 41, and outputs the signature data to the ACR database unit 43. The reference signature extracting unit 42 also causes the signature DRM encrypting unit 45 to encrypt the extracted signature data through a predetermined DRM encryption process based on the SCM information included in the metadata corresponding to the input content. However, there are cases where the encryption is not performed depending on the contents of the SCM information.

The signature data extraction method used at the reference signature extracting unit 42 may be an existing method. For example, the watermark embedded beforehand in the content may be extracted and set as the signature data, or a fingerprint may be calculated and set as the signature data.

Where a fingerprint is used as the signature data, identical signature data can be obtained before and after conversion of the resolution, the aspect ratio, the bit rate, the encoding format, or the like of the content. Accordingly, the identification accuracy in a case where content identification is performed based on the signature data can be increased.

In a case where there is more than one ACR server 23, the same signature data extraction method is not necessarily used at the reference signature extracting units 42, and a different extraction method may be employed for each ACR server 23.

The ACR database unit 43 generates and stores ACR reference data that associates the respective pieces of signature data that has been extracted by the reference signature extracting unit 42 and been DRM-encrypted as necessary, with the content identifiers representing the content from which the signature data has been extracted. With this, the signature data that has been extracted from the content and been DRM-encrypted is turned into a database.

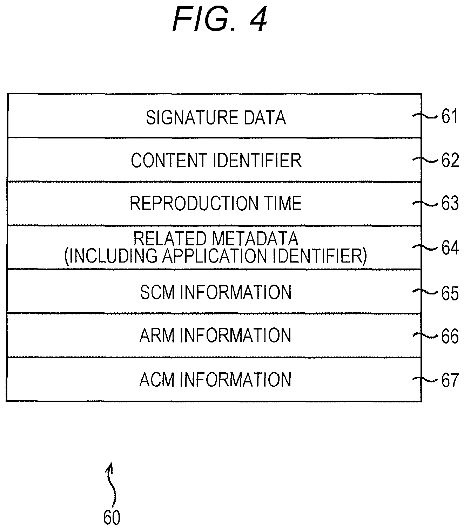

In a case where more than one ACR server 23 exists, and a different signature data extraction method is employed at the reference signature extracting unit 42 of each ACR server 23, the ACR reference data having the signature data associated with the SCM information, the ARM information, and the ACM information integrated for each piece of content is turned into a database in each corresponding ACR database unit 43. The data structure of the ACR reference data will be described later with reference to Fig. 4.

By referring to the ACR database unit 43, the ACR response generating unit 44 identifies the content from which the signature data included in the ACR query transmitted from the ACR client 32 has been extracted. In this identification, if the signature data is DRM-encrypted, the ACR database unit 43 causes the signature DRM decrypting unit 46 to decrypt the signature data based on the SCM information included in the ACR reference data, and then compares the decrypted signature data with the signature data included in the ACR query.

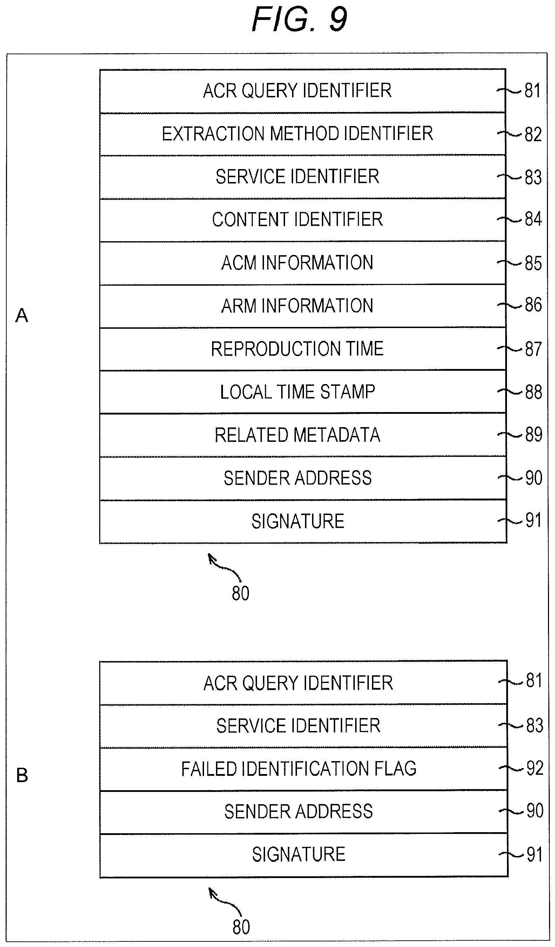

The ACR response generating unit 44 further generates an ACR response as an identification result including the content identifier, the related metadata, the ARM information, the ACM information, and the like. Under the control of a profile matching server 24, the ACR response generating unit 44 further performs matching and filtering on the related metadata stored in the ACR response, and transmits the ACR response to the reception apparatus 30. The data structure of the ACR response will be described later with reference to Fig. 9.

In accordance with a request from the reference signature extracting unit 42, the signature DRM encrypting unit 45 encrypts signature data extracted by the reference signature extracting unit 42 through a predetermined DRM encryption process. In doing so, the signature DRM encrypting unit 45 performs an authentication process with the content server 21, and then performs a necessary key exchange with the content server 21. Accordingly, the copyrights to both the content and the signature data thereof can be protected for the holder of the copyright to the content, and unauthorized use of the signature not involving the content server 21 can be prevented when an ACR service is performed.

In accordance with a request from the ACR database unit 43, the signature DRM decrypting unit 46 decrypts the DRM-encrypted signature data included in the ACR reference data. In doing so, the signature DRM decrypting unit 46 performs an authentication process with the content server 21 based on the SCM information included in the ACR reference data, and then performs the key exchange necessary for the DRM decryption process with the content server 21. Accordingly, the copyrights to both the content and the signature data thereof can be protected for the holder of the copyright to the content, and unauthorized use of the signature not involving the content server 21 can be prevented when an ACR service is performed.

Specifically, the signature data is extracted from broadcast content (a television program), for example, without permission from the broadcast station holding the copyright to the content. ACR reference data is then generated, an unauthorized ACR server 23 is activated, and an ACR service is performed. In this case, the unauthorized ACR server 23 performs an authentication process with the content server 21, but is not authenticated as an authorized ACR server 23 by the content server 21. Accordingly, by analyzing the log of the content server 21, the holder of the copyright to the content can detect the existence of the ACR server 23 performing the unauthorized ACR service, and eliminate the ACR server 23.

### [Specific Example Structure of the ACR Client 32]

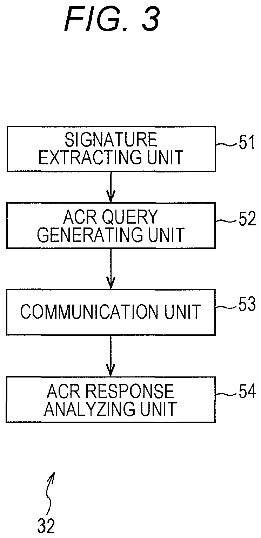

Fig. 3 shows a specific example structure of the ACR client 32 in the primary screen device 30A.

The ACR client 32 is formed with a signature extracting unit 51, an ACR query generating unit 52, a communication unit 53, and an ACR response analyzing unit 54.

The signature extracting unit 51 extracts the signature data indicating the features of content at predetermined sampling intervals from the content that branches off and is supplied from the content renderer 31, and outputs the signature data to the ACR query generating unit 52. The signature data extraction method employed at the signature extracting unit 51 is the same as that employed at the reference signature extracting unit 42 of the ACR server 23 being used.

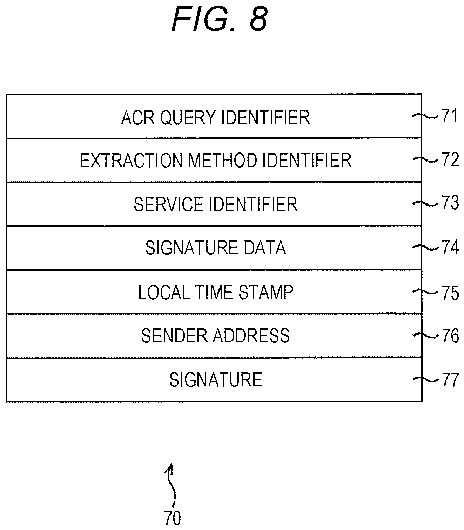

The ACR query generating unit 52 generates an ACR query that includes the signature data extracted by the signature extracting unit 51, and is to be used for requesting the ACR server 23 to identify the content. The data structure of the ACR query will be described later with reference to Fig. 8.

The communication unit 53 transmits the ACR query generated by the ACR query generating unit 52 to the ACR server 23, receives an ACR response returned from the ACR server 23, and outputs the ACR response to the ACR response analyzing unit 54. The ACR response analyzing unit 54 analyzes the ACR response, and notifies the application manager 33 of the related metadata, the linked application copy control information, the linked application rendering information, and the like, which are included in the ACR response. The application manager 33 acquires and executes the linked application based on this notification.

### [Data Structure of the ACR Reference Data]

Fig. 4 shows the data structure of the ACR reference data turned into a database in the ACR database unit 43 of the ACR server 23.

In the ACR reference data 60, each piece of signature data 61 periodically extracted from content is associated with a content identifier 62, a reproduction time 63, related metadata 64, SCM information 65, ARM information 66, and ACM information.

The signature data 61 is extracted from content by the reference signature extracting unit 42, and is DRM-encrypted by the signature DRM encrypting unit 45 as necessary. The content identifier 62 is the information for identifying the content from which the signature data 61 has been extracted. The reproduction time 63 indicates the progress of the content at the time when the signature data 61 is extracted from the content represented by the content identifier 62, and is represented by the time that has elapsed from the top of the content.

The related metadata 64 includes the metadata of the content represented by the content identifier 62, the application identifier representing the linked application to be executed in conjunction with the progress of the content indicated by the reproduction time 63 and the supplier (the application server 22 in this case) of the linked application, various kinds of data to be used by the linked application to be executed, and the like.

The related metadata 64 may vary with the progress of the content indicated by the reproduction time 63.

The SCM information 65 indicates whether the signature data 61 needs to be protected by copyright like the content. If the signature data 61 needs to be protected by copyright, the SCM information 65 is the information for defining the contents of an appropriate copyright protection process. With the SCM information 65, copyright protection for each piece of the periodically-extracted signature data 61 can be realized.

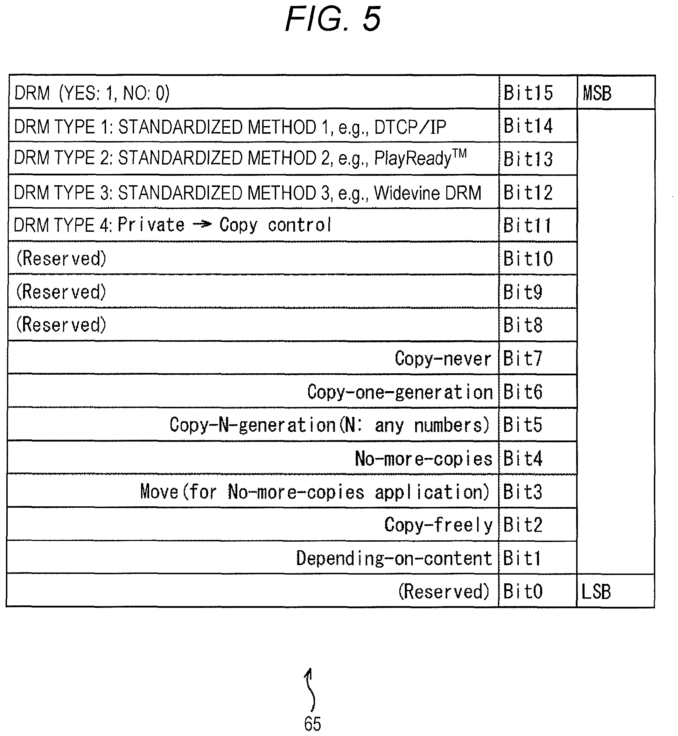

Fig. 5 shows an example data structure in a case where the SCM information 65 is defined in 16 bits.

The 16-bit SCM information 65 includes, from the MSB side, a flag (Bit 15) indicating whether DRM control is to be performed, and flags (Bits 14 through 11) for selecting a DRM method from among three standardized methods and one unstandardized local method if DRM control is to be performed. The 16-bit SCM information 65 further includes flags (Bits 7 through 1) for defining specific details (such as copy protection or copy permission only for one generation) of the DRM control for the signature data 61 in a case where the unstandardized local method is selected, and reserve flags (Bits 10 through 8, and Bit 0) reserved for future expansion.

For example, in a case where the signature data 61 is extracted from content with DRM information indicating copy protection, and the holder of the copyright to the content requests the same copyright management for the signature data 61 as the copyright management for the content while requesting management of the signature data 61 by DTCP/IP, which is a standardized DRM control method, the SCM information 65 is 1100 0000 1000 0000'b.

Referring back to Fig. 4, the ARM information 66 is the information for defining execution and the destination of image display (the rendering destination) of the linked application determined to be executed in conjunction with the progress of the content from which the signature data 61 has been extracted.

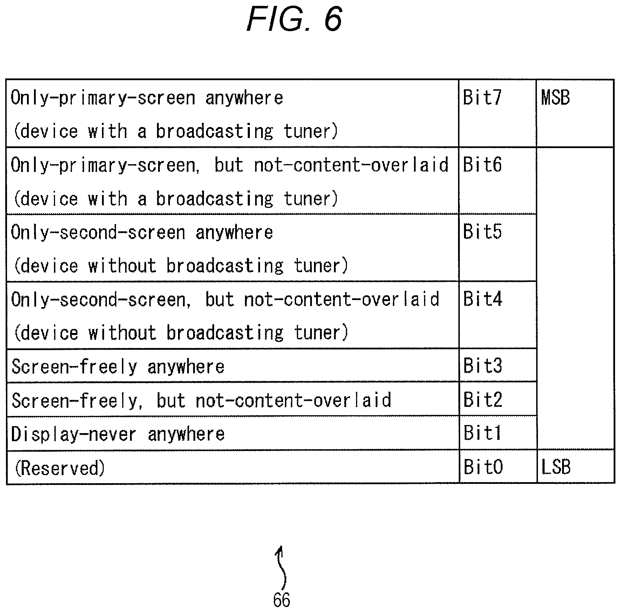

Fig. 6 shows an example data structure in a case where the ARM 66 is defined in 8 bits.

The 8-bit ARM information 66 includes, from the MSB side, a flag (Bit 7) for allowing display anywhere on the primary screen device 30A, a flag (Bit 6) for allowing display on the primary screen device 30A but not allowing display superimposition on content, a flag (Bit 5) for allowing display anywhere on the second screen device 30B, and a flag (Bit 4) for allowing display on the second screen device 30B but not allowing display superimposition on content. The 8-bit ARM information 66 also includes a flag (Bit 3) for allowing display anywhere on the primary screen device 30A and second screen device 30B, a flag (Bit 2) for allowing display anywhere on the primary screen device 30A and the second screen device 30B but not allowing display superimposition on content, and a flag (Bit 1) for prohibiting display on any device. The 8-bit ARM information 66 further includes a reserve flag (Bit 0) reserved for future expansion.

For example, in a case where the display relationship between content and the application is adjusted by the respective copyright holders, and as a result, rendering of the linked application on the primary screen device 30A is allowed but display of the linked application on the content is prohibited, the ARM information 66 is 0100 0000'b.

Referring back to Fig. 4, the ACM information 67 is for displaying copyright information about the linked application determined to be executed in conjunction with progress of the content from which the signature data 61 has been extracted, cited content, and the like. The copyright information is defined by the holder of the copyright to the linked application.

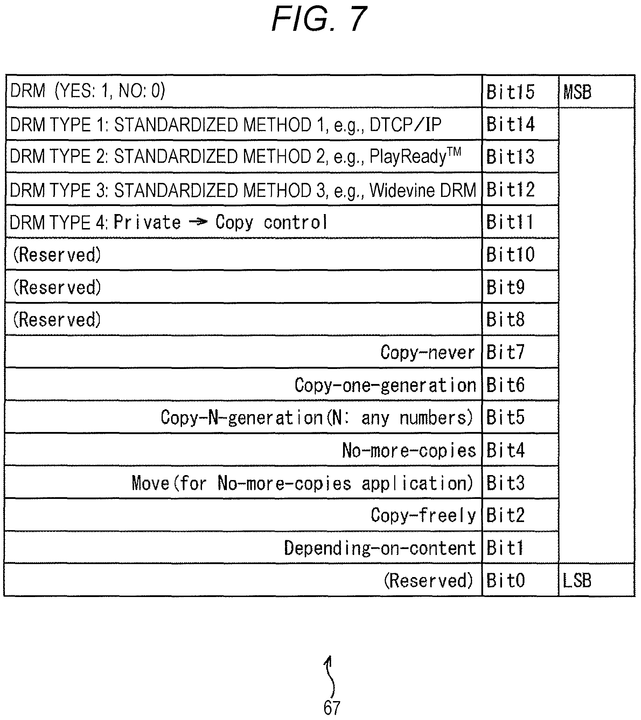

Fig. 7 shows an example data structure in a case where the ACM information 67 is defined in 16 bits.

The 16-bit ACM information 67 includes, from the MSB side, a flag (Bit 15) indicating whether DRM control is to be performed, and flags (Bits 14 through 11) for selecting a DRM method from among three standardized methods and one unstandardized local method if DRM control is to be performed. The 16-bit ACM information 67 further includes flags (Bits 7 through 1) for defining specific details (such as copy protection or copy permission only for one generation) of the linked application DRM control in a case where the unstandardized local method is selected, and reserve flags (Bits 10 through 8, and Bit 0) reserved for future expansion.

For example, in a case where the holder of the copyright to the linked application determines to manage the liked application and cited content by PlayReady (a trade name), which is a standardized DRM control method, and allows unlimited copying, the ACM information 67 is 1010 0000 0000 0100'b.

### [Data Structure of an ACR Query]

Fig. 8 shows the data structure of an ACR query generated by the ACR query generating unit 52 of the ACR client 32.

The ACR query 70 includes an ACR query identifier 71, an extraction method identifier 72, a service identifier 73, signature data 74, a local time stamp 75, a sender address 76, and a signature 77.

The ACR query identifier 71 is the information for uniquely identifying the ACR query 70. The extraction method identifier 72 is the information for identifying the extraction method used in extracting the signature data 74. The service identifier 73 is the information for selecting the ACR server 23 to obtain an ACR response in reply to transmission of the ACR query 70 in a case where more than one ACR server 23 exists.

The signature data 74 is extracted from the content at the ACR client 32. The local time stamp 75 indicates the time at which the signature data 74 is extracted from the content, and is represented by the time indicated by the local system clock of the primary screen device 30A.

The sender address 76 is the address of the ACR client 32 transmitting the ACR query 70 in the bidirectional communication network 12, and is to be used as the information indicating the address to which the ACR response generated at the ACR server 23 in reply to the ACR query 70 is to be returned. The signature 77 is for preventing falsification of the ACR query 70. The entire ACR query 70 may be encrypted and transmitted independently of the copyright to the content.

### [Data Structure of an ACR Response]

Fig. 9 shows the data structure of an ACR response generated by the ACR response generating unit 44 of the ACR server 23.

The ACR response 80 has the data structure shown in A or B in the drawing. A in the drawing shows the data structure of the ACR response 80 in a case where the content from which the signature data 74 included in the ACR query 70 has been extracted is identified, or where the content being viewed with the primary screen device 30A is identified. B in the drawing shows the data structure of the ACR response 80 in a case where the content cannot be identified.

The ACR response 80 in a case where the content being viewed with the primary screen device 30A can be identified (A in the drawing) includes an ACR query identifier 81, an extraction method identifier 82, a service identifier 83, a content identifier 84, ACM information 85, ARM information 86, a reproduction time 87, a local time stamp 88, related metadata 89, a sender address 90, and a signature 91.

Meanwhile, the ACR response 80 in a case where the content being viewed with the primary screen device 30A cannot be identified (B in the drawing) includes an ACR query identifier 81, a service identifier 83, a sender address 90, a signature 91, and a failed identification flag 92.

The ACR query identifier 81, the extraction method identifier 82, the service identifier 83, and the local time stamp 88 are for identifying the ACR query 70 requesting a return of the ACR response 80, and are written by citing the ACR query identifier 71, the extraction method identifier 72, the service identifier 73, and the local time stamp 75 of the ACR query 70.

The content identifier 84, the ACM information 85, the ARM information 86, the reproduction time 87, and the related metadata 89 are for indicating a result of content identification, and are written by citing the content identifier 62, the ARM information 66, the ACM information 67, the reproduction time 63, and the related metadata 64 of the corresponding ACR reference data 60.

The sender address 90 is the address of the ACR server 24 transmitting the ACR response 80 in the bidirectional communication network 12. The signature 91 is for preventing falsification of the ACR response 80. The entire ACR response 80 may be encrypted and transmitted independently of the copyright to the content so that falsification of the ACR response 80 is prevented.

The failed identification flag 92 is the flag indicating that the content from which the signature data 74 included in the ACR query 70 from the ACR client 32 has been extracted, or the content being viewed with the primary screen device 30A, cannot be identified at the ACR server 23.

### [Operation of the Application Linkage System 10]

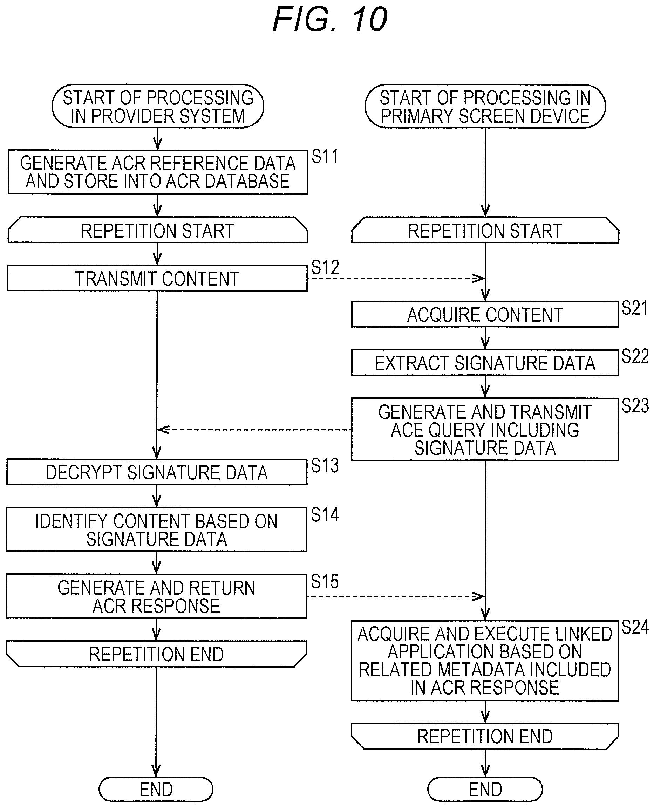

Fig. 10 is a flowchart for explaining operation of the application linkage system 10.

In the provider system 20, in step S11 as the preprocessing for starting broadcasting of content via the broadcast network 11, the content to be broadcast thereafter and the related metadata 64 are supplied to the ACR server 23. The ACR server 23 extracts signature data at predetermined intervals from the supplied content, performs DRM encryption as necessary, generates the ACR reference data 60 including the related metadata 64, the SCM information 65, the ARM information 66, and the ACM information 67 for each piece of the signature data, and registers the ACR reference data 60 in the ACR database unit 43.

The ACR server 23 generates the corresponding ACR reference data 60 not only for the content to be broadcast but also for various kinds of content that can be viewed on the side of the home network system 30, and turns the ACR reference data 60 into a database. After the ACR reference data 60 corresponding to various kinds of content is turned into a database in this manner, steps S12 through S15 described below are repeated.

In step S12, the content server 21 of the provider system 20 starts broadcasting the content via the broadcast network 11.

In the home network system 30, on the other hand, steps S21 through S24 described below are repeated while content (not limited to the broadcast content) is being viewed.

In step S21, the content renderer 31 of the primary screen device 30A acquires the content being viewed, and outputs the content to the ACR client 32 in a branched manner. In step S22, the ACR client 32 extracts the signature data 74 at predetermined sampling intervals from the currently-viewed content that is input from the content renderer 31 in a branched manner.

In step S23, the ACR client 32 generates the ACR query 70 including the signature data 74 every time the signature data 74 is extracted, and transmits the ACR query 70 to the ACR server 23.

The ACR server 23 that has received the ACR query 70 identifies the content from which the signature data 74 included in the ACR query 70 has been extracted.

Specifically, in step S13, the ACR database unit 43 acquires the key necessary in the DRM decryption process from the content server 21 and decrypts the DRM-encrypted signature data 61 in a case where the signature data 61 of the ACR reference data 60 turned into a database is DRM-encrypted.

In step S14, the ACR response generating unit 44 of the ACR server 23 refers to the ACR database unit 43 and identifies the content from which the signature data 74 included in the received ACR query 70 has been extracted.

In step S15, the ACR response generating unit 44 generates the ACR response 80 in accordance with a result of the content identification, and returns the generated ACR response 80 to the ACR client 32 that has sent the ACR query 70.

In step S24, the ACR client 32 that has received the ACR response 80 analyzes the related metadata 89 included in the ACR response 80, and causes the application manager 33 to acquire and execute the linked application that should be executed in conjunction with progress of the content being viewed. Based on the application identifier included in the related metadata 89, the application manager 33 acquires the linked application from the application server 22, and executes the linked application. In doing so, the application manager 33 analyzes the ACM information 85 and the ARM information 86 included in the ACR response 80, decrypts the DRM-encrypted linked application, determines the destination of the rendering of the linked application, and performs cited content DRM control as well as executing the linked application.

The above described procedures in steps S12 through S15 and the above described procedures in steps S21 through 24 are repeatedly carried out while the content is being viewed on the side of the home network system 30. Accordingly, the linked application can be executed in conjunction with progress of the content being viewed.

### [Specific Operations in the Linked Application Rendering Control and the DRM Decryption Process]

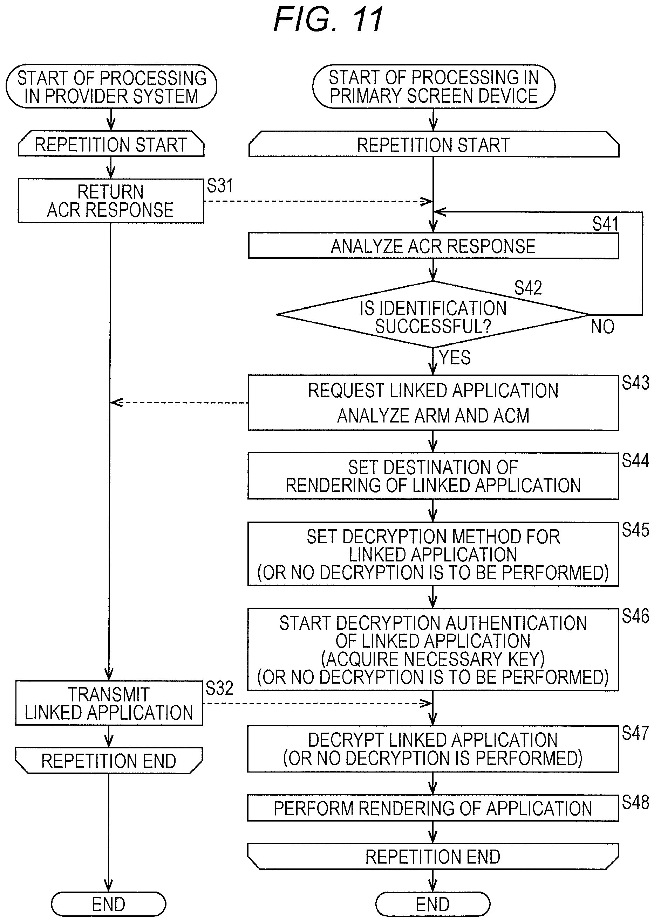

Fig. 11 is a flowchart for explaining in detail the operations in the linked application rendering control and the DRM decryption process to be performed between the ACR server 23 and the application server 22 of the provider system 20, and the ACR client 32 and the application manager 33 of the primary screen device 30A.

The procedures in steps S31 and S32 in the provider system 20 described below are repeatedly carried out while content is being viewed with the primary screen device 30A.

In step S31, the ACR server 23 identifies the content in response to the ACR query 70 from the ACR client 32, generates the ACR response 80 corresponding to a result of the identification, and returns the ACR response 80 to the ACR client 32.

In step S41, the ACR client 32 that has received the ACR response 80 analyzes the ACR response 80. In step S42, the ACR client 32 determines whether the content being viewed has been successfully identified.

Specifically, a check is made to determine whether the identification is successful based on whether the failed identification flag 92 is included in the ACR response 80. In a case where the failed identification flag 92 is included in the ACR response 80, and the identification is determined to be unsuccessful, the process returns to step S41. In a case where the failed identification flag 92 is not included in the ACR response 80, and the identification is determined to be successful, on the other hand, the process moves on to step S43. In this case, the data structure of the ACR response 80 is as shown in A in Fig. 9, and includes the ACM information 85 and the ARM information 86.

In step S43, the ACR client 32 notifies the application manager 33 of the application identifier of the linked application in the related metadata 89, the ACM information 85, and the ARM information 86, which are included in the ACR response 80. Based on the application identifier, the application manager 33 accesses the application server 22, and requests the linked application. The application manager 33 also analyzes the ACM information 85 and the ARM information 86.

In step S44, based on a result of the analysis of the ARM information 86, the application manager 33 sets the destination of the rendering of the linked application to be executed in conjunction with the content being viewed, and determines whether display is to be superimposed on the content. In step S45, based on the ACM information 85, the application manager 33 sets a decryption method (or sets the software module or the like for performing the DRM decryption process) in a case where the linked application to be executed in conjunction with the content being viewed is DRM-encrypted. In step S46, the application manager 33 further acquires the key necessary in the decryption process through a decryption authentication process in a case where the linked application is DRM-encrypted.

Meanwhile, in step S32, the application server 22 of the provider system 20 supplies the linked application in a DRM-encrypted state (or in an unencrypted state) to the application manager 33 in response to the request that has been made by the application manager 33 in step S43. In step S47, the application manager 33 that has received the linked application uses the key acquired in step S46 and decrypts the received linked application in a DRM-encrypted state (or in an unencrypted state) according to the decryption method defined by the ACM information 85.

In step S48, the application manager 33 executes the decrypted linked application, and controls the rendering by the linked application based on the setting performed in step S44.

Through the above described operations, the rendering of the linked application and the DRM control can be performed, with the intentions of the respective holders of the copyrights to the linked application and the content being reflected.

As described above, in this embodiment, the copyright information about the signature data extracted from content is defined as the SCM information 65. Accordingly, an unauthorized ACR service without permission from the holder of the copyright to the content can be prevented.

Also, the ARM information 66 as the operation control information for the linked application to be executed in conjunction with progress of content can be set by the holder of the copyright to the content. Accordingly, the linked application can be executed, while the rights and the intentions of both holders of the copyrights to the content and the linked application are reflected. Accordingly, the holder of the copyright to the content can prevent execution of a linked application that might infringe the copyright. Meanwhile, the holder of the copyright to the linked application can prevent rendering in an unintended device.

Furthermore, the ACM information 67 for copyright protection for the linked application and the content cited by the linked application is defined in this embodiment. Accordingly, unauthorized copying of the linked application and the cited content can be prevented.

Meanwhile, each of the provider system 20 and the primary screen device 30A that perform the above described series of processes may be formed with hardware, or may be realized by a computer executing software. This computer may be a computer incorporated into special-purpose hardware, or may be a general-purpose personal computer that can execute various kinds of functions as various kinds of programs are installed thereinto.

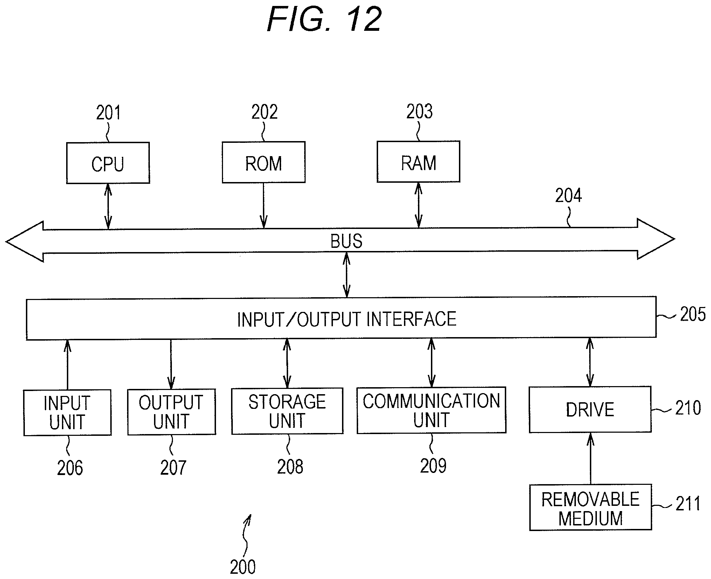

Fig. 12 is a block diagram showing an example structure of the hardware of the above mentioned computer.

In this computer 200, a CPU (Central Processing Unit) 201, a ROM (Read Only Memory) 202, and a RAM (Random Access Memory) 203 are connected to one another by a bus 204.

An input/output interface 205 is further connected to the bus 204. An input unit 206, an output unit 207, a storage unit 208, a communication unit 209, and a drive 210 are connected to the input/output interface 205.

The input unit 206 is formed with a keyboard, a mouse, a microphone, and the like. The output unit 207 is formed with a display, a speaker, and the like. The storage unit 208 is formed with a hard disk, a nonvolatile memory, or the like. The communication unit 209 is formed with a network interface or the like. The drive 210 drives a removable medium 211 such as a magnetic disk, an optical disk, a magnetooptical disk, or a semiconductor memory.

In the computer 200 having the above described structure, the CPU 201 loads the programs stored in the storage unit 208 into the RAM 203 via the input/output interface 205 and the bus 204, and executes the programs, so that the above described series of processes are performed.

The programs to be executed by the computer 200 (the CPU 201) may be recorded on the removable medium 211 as a package medium to be provided, for example. Alternatively, the programs can be provided via a wired or wireless transmission medium such as a local area network, the Internet, or digital satellite broadcasting.

In the computer 200, the programs can be installed into the storage unit 208 via the input/output interface 205 when the removable medium 211 is mounted on the drive 210. The program can also be received by the communication unit 209 via a wired or wireless transmission medium, and be installed into the storage unit 208. Also, the program may be installed beforehand into the ROM 202 or the storage unit 208.

The programs to be executed by the computer 200 may be programs for performing processes in chronological order in accordance with the sequence described in this specification, or may be programs for performing processes in parallel or performing a process when necessary, such as when there is a call.

It should be noted that embodiments of the present disclosure are not limited to the above described embodiments, and various modifications may be made to them without departing from the scope of the present disclosure.

### REFERENCE SIGNS LIST

- 10: Application linkage system
- 11: Broadcast network
- 12: Bidirectional communication network
- 20: Provider system
- 21: Content server
- 22: Application server
- 23: ACR server
- 30: Home network system
- 30A: Primary screen device
- 30B: Second screen device
- 31: Content renderer
- 32: ACR client
- 33: Application manager
- 41: Content acquiring unit
- 42: Reference signature extracting unit
- 43: ACR database unit
- 44: ACR response generating unit
- 45: Signature DRM encrypting unit
- 46: Signature DRM decrypting unit
- 51: Signature extracting unit
- 52: ACR query generating unit
- 53: Communication unit
- 54: ACR response analyzing unit
- 60: ACR reference data
- 65: SCM information
- 66: ARM information
- 67: ACM information
- 70: ACR query
- 80: ACR response
- 85: ACM information
- 86: ARM information
- 200: Computer
- 201: CPU

## Claims

1. An information processing device comprising:
a content managing unit configured to manage first content viewable on a side of a content reproduction device that reproduces content;
a database unit configured to generate reference data and turn the generated reference data into a database, the reference data being generated by associating first signature data extracted from the first content with a content identifier, right management information, an application identifier and rendering control information, the content identifier representing the first content from which the first signature data is extracted, the application identifier representing an application to be executed on the side of the content reproduction device in conjunction with progress of the first content when the first content is being viewed on the side of the content reproduction device, the rendering control information being for controlling rendering of the application, the first signature data indicating a feature of the first content; and
an identifying unit configured to identify the content and return a response indicating an identification result by referring to the reference data of the database unit in reply to a query including second signature data extracted from second content being viewed by a user of the content reproduction device, the query being transmitted from the side of the content reproduction device, the second signature data indicating a feature of the second content.

2. The information processing device according to claim 1, wherein
the first signature data of the reference data is encrypted, and
the database unit is configured to decrypt the encrypted first signature data through an authentication process with the content managing unit.

3. The information processing device according to claim 1, wherein
the right management information includes an item for selecting an existing right management method for the first signature data, in particular further includes an item for arbitrarily setting a right management method for the first signature data.

4. An information processing method implemented in an information processing device,
the information processing method comprising:
a database forming step of generating reference data and turning the generated reference data into a database, the reference data being generated by associating first signature data extracted from first content with a content identifier, right management information, an application identifier and rendering control information, the content identifier representing the first content from which the first signature data is extracted, the application identifier representing an application to be executed on a side of a content reproduction device in conjunction with progress of the first content when the first content is being viewed on the side of the content reproduction device, the rendering control information being for controlling rendering of the application, the first content being viewable on the side of the content reproduction device that reproduces content, the first signature data indicating a feature of the first content; and
an identifying step of identifying the content and returning a response indicating an identification result by referring to the reference data of the database in reply to a query including second signature data extracted from second content being viewed by a user of the content reproduction device, the query being transmitted from the side of the content reproduction device, the second signature data indicating a feature of the second content,
the database forming step and the identifying step being carried out by the information processing device.

5. The information processing device according to claim 1, wherein
the rendering control information includes at least one of an item for limiting a device serving as a destination of output of an image from the application, and an item for restricting superimposition of an image from the application and an image of the content.

6. An information processing device comprising:
a query generating unit configured to extract signature data from content being reproduced, generate a query including the signature data, transmit the query to an identification server, and receive a response returned from the identification server in reply to the query, the signature data indicating a feature of the content; and
an application executing unit configured to acquire and execute an application based on an application identifier included in the received response, the application being designated to be executed in conjunction with progress of the content being reproduced, and control rendering of the application based on rendering control information included in the response, and manage the application and content cited by the application based on right management information included in the response.

7. The information processing device according to claim6, wherein the right management information includes an item for selecting an existing right management method for the application and content cited by the application.

8. The information processing device according to claim 6, wherein the right management information includes an item for arbitrarily setting a right management method for the application and content cited by the application.

9. The information processing device according to claim 6, wherein the application executing unit is configured to:
decrypt the application based on the right management information, the application being encrypted, and/or
manage copying of the application and the cited content based on the right management information.

10. An information processing method implemented in an information processing device, the information processing method comprising:
a transmitting step of extracting signature data from content being reproduced, generating a query including the signature data, and transmitting the query to an identification server, the signature data indicating a feature of the content;
a receiving step of receiving a response returned from the identification server in reply to the query; and
a controlling or managing step of acquiring and executing an application based on an application identifier included in the received response, the application being designated to be executed in conjunction with progress of the content being reproduced, and controlling rendering of the application based on rendering control information included in the response, and managing the application and content cited by the application based on right management information included in the response,
the transmitting step, the receiving step, and the controlling or managing step being carried out by the information processing device.

11. The information processing method according to claim 10, wherein the right management information includes an item for selecting an existing right management method for the application and content cited by the application.

12. The information processing method according to claim 10, wherein the right management information includes an item for arbitrarily setting a right management method for the application and content cited by the application.

13. The information processing method according to claim 10 comprising:
decrypting the application based on the right management information, the application being encrypted; and/or
managing copying of the application and the cited content based on the right management information.

14. A program causing a computer to perform the steps of the information processing method according to any of claims 10 to 13 when said program is executed by the computer.

## Patentansprüche

1. Informationsverarbeitungsvorrichtung, welche umfasst:
eine Inhaltsverwaltungseinheit, die ausgestaltet ist, ersten Inhalt zu verwalten, der auf einer Seite einer Inhaltswiedergabevorrichtung, die Inhalte wiedergibt, sichtbar ist;
eine Datenbankeinheit, die ausgestaltet ist, Referenzdaten zu erzeugen und die erzeugten Referenzdaten in eine Datenbank umzuwandeln, wobei die Referenzdaten durch Assoziieren erster Signaturdaten, die aus dem ersten Inhalt extrahiert werden, mit einem Inhaltsidentifikator, Rechteverwaltungsinformationen, einem Anwendungsidentifikator und Wiedergabesteuerinformationen erzeugt werden, wobei der Inhaltsidentifikator den ersten Inhalt darstellt, aus dem die ersten Signaturdaten extrahiert werden, wobei der Anwendungsidentifikator eine Anwendung darstellt, die auf der Seite der Inhaltswiedergabevorrichtung in Verbindung mit dem Fortschritt des ersten Inhalts auszuführen ist, wenn der erste Inhalt auf der Seite der Inhaltswiedergabevorrichtung angezeigt wird, wobei die Wiedergabesteuerinformationen zum Steuern der Wiedergabe der Anwendung dienen, wobei die ersten Signaturdaten ein Merkmal des ersten Inhalts angeben; und
eine Identifizierungseinheit, die ausgestaltet ist, den Inhalt zu identifizieren und eine Antwort zurückzugeben, die ein Identifikationsergebnis angibt, indem sie sich auf die Referenzdaten der Datenbankeinheit als Antwort auf eine Abfrage bezieht, die zweite Signaturdaten umfasst, die aus zweitem Inhalt extrahiert werden, der von einem Benutzer der Inhaltswiedergabevorrichtung betrachtet wird, wobei die Abfrage von der Seite der Inhaltswiedergabevorrichtung übertragen wird, wobei die zweiten Signaturdaten ein Merkmal des zweiten Inhalts angeben.

2. Informationsverarbeitungsvorrichtung nach Anspruch 1, wobei
die ersten Signaturdaten der Referenzdaten verschlüsselt sind, und
die Datenbankeinheit ausgestaltet ist, die verschlüsselten ersten Signaturdaten durch einen Authentifizierungsprozess mit der Inhaltsverwaltungseinheit zu entschlüsseln.

3. Informationsverarbeitungsvorrichtung nach Anspruch 1, wobei
die Rechteverwaltungsinformationen ein Element zum Auswählen eines bestehenden Rechteverwaltungsverfahrens für die ersten Signaturdaten umfassen, insbesondere ferner ein Element zum willkürlichen Einstellen eines Rechteverwaltungsverfahrens für die ersten Signaturdaten umfassen.

4. Informationsverarbeitungsverfahren, welches in einer Informationsverarbeitungsvorrichtung implementiert ist,
wobei das Informationsverarbeitungsverfahren umfasst:
einen Datenbankbildungsschritt zum Erzeugen von Referenzdaten und zum Umwandeln der erzeugten Referenzdaten in eine Datenbank, wobei die Referenzdaten durch Assoziieren erster aus dem Inhalt extrahierter Signaturdaten mit einem Inhaltsidentifikator, Rechteverwaltungsinformationen, einem Anwendungsidentifikator und Wiedergabesteuerinformationen erzeugt werden, wobei der Inhaltsidentifikator den ersten Inhalt darstellt, aus dem die ersten Signaturdaten extrahiert werden, wobei der Anwendungsidentifikator eine Anwendung darstellt, die auf der Seite einer Inhaltswiedergabevorrichtung in Verbindung mit dem Fortschritt des ersten Inhalts auszuführen ist, wenn der erste Inhalt auf der Seite der Inhaltswiedergabevorrichtung angezeigt wird, wobei die Wiedergabesteuerinformation zum Steuern der Wiedergabe der Anwendung dienen, wobei der erste Inhalt auf der Seite der Inhaltswiedergabevorrichtung, die Inhalte wiedergibt, angezeigt wird, wobei die ersten Signaturdaten ein Merkmal des ersten Inhalts angeben; und
einen Identifizierungsschritt zum Identifizieren des Inhalts und zum Rückgeben einer Antwort, die ein Identifikationsergebnis, durch Bezugnahme auf die Referenzdaten der Datenbank als Antwort auf eine Abfrage, angibt, die zweite Signaturdaten umfasst, die aus zweitem Inhalt extrahiert werden, der von einem Benutzer der Inhaltswiedergabevorrichtung betrachtet wird, wobei die Abfrage von der Seite der Inhaltswiedergabevorrichtung übertragen wird, wobei die zweiten Signaturdaten ein Merkmal des zweiten Inhalts anzeigen,
wobei der Datenbankbildungsschritt und der Identifizierungsschritt von der Informationsverarbeitungsvorrichtung ausgeführt werden.

5. Informationsverarbeitungsvorrichtung nach Anspruch 1, wobei
die Wiedergabesteuerinformationen mindestens ein Element zum Begrenzen einer Vorrichtung, die als Ziel der Ausgabe eines Bildes aus der Anwendung dient, und ein Element zum Begrenzen der Überlagerung eines Bildes aus der Anwendung und eines Bildes des Inhalts umfasst.

6. Informationsverarbeitungsvorrichtung, welche umfasst:
eine Abfrageerzeugungseinheit, die ausgestaltet ist, Signaturdaten aus dem reproduzierten Inhalt zu extrahieren, eine Abfrage zu erzeugen, die die Signaturdaten enthält, die Abfrage an einen Identifikationsserver zu senden und eine Antwort zu empfangen, die vom Identifikationsserver als Antwort auf die Abfrage zurückgegeben wird, wobei die Signaturdaten ein Merkmal des Inhalts angeben; und
eine Anwendungsausführungseinheit, die ausgestaltet ist, eine Anwendung basierend auf einer in der empfangenen Antwort enthaltenen Anwendungsidentifikation zu erfassen und auszuführen, wobei die Anwendung dazu bestimmt ist, in Verbindung mit dem Fortschritt des zu reproduzierenden Inhalts ausgeführt zu werden, und die Wiedergabe der Anwendung basierend auf Wiedergabesteuerinformationen, die in der Antwort enthalten sind, zu steuern und die Anwendung und den von der Anwendung angegebenen Inhalt basierend auf den in der Antwort enthaltenen Rechteverwaltungsinformationen zu verwalten.

7. Informationsverarbeitungsvorrichtung nach Anspruch 6, wobei die Rechteverwaltungsinformationen ein Element zum Auswählen eines bestehenden Rechteverwaltungsverfahrens für die Anwendung und den von der Anwendung genannten Inhalt umfassen.

8. Informationsverarbeitungsvorrichtung nach Anspruch 6, wobei die Rechteverwaltungsinformationen ein Element zum willkürlichen Einstellen eines Rechteverwaltungsverfahrens für die Anwendung und den von der Anwendung angegebenen Inhalt umfassen.

9. Informationsverarbeitungsvorrichtung nach Anspruch 6, wobei die Anwendungsausführungseinheit ausgestaltet ist, um:
die Anwendung basierend auf Rechteverwaltungsinformationen zu entschlüsseln, wobei die Anwendung verschlüsselt ist, und/oder
das Kopieren der Anwendung und des angegebenen Inhalts basierend auf den Rechteverwaltungsinformationen zu verwalten.

10. Informationsverarbeitungsverfahren, welches in einer Informationsverarbeitungsvorrichtung implementiert ist, wobei das Informationsverarbeitungsverfahren umfasst:
einen Übertragungsschritt zum Extrahieren von Signaturdaten aus zu reproduzierenden Inhalten, Erzeugen einer die Signaturdaten enthaltenden Abfrage und Übertragen der Abfrage an einen Identifizierungsserver, wobei die Signaturdaten ein Merkmal des Inhalts angeben;
einen Empfangsschritt zum Empfangen einer Antwort, die vom Identifikationsserver als Antwort auf die Abfrage zurückgegeben wird; und
einen Steuerungs- oder Verwaltungsschritt zum Erfassen und Ausführen einer Anwendung basierend auf einem in der empfangenen Antwort enthaltenen Anwendungsidentifikator, wobei die Anwendung dazu bestimmt ist, in Verbindung mit dem Fortschritt des zu reproduzierenden Inhalts ausgeführt zu werden, und zum Steuern der Wiedergabe der Anwendung basierend auf der in der Antwort enthaltenen Wiedergabesteuerinformationen, und zum Verwalten der Anwendung und des von der Anwendung angegebenen Inhalts basierend auf den in der Antwort enthaltenen Rechteverwaltungsinformationen,
wobei der Übertragungsschritt, der Empfangsschritt und der Steuerungs- oder Verwaltungsschritt von der Informationsverarbeitungsvorrichtung ausgeführt werden.

11. Informationsverarbeitungsverfahren nach Anspruch 10, wobei die Rechteverwaltungsinformationen ein Element zum Auswählen eines bestehenden Rechteverwaltungsverfahrens für die Anwendung und den von der Anwendung angegebenen Inhalt umfassen.

12. Informationsverarbeitungsverfahren nach Anspruch 10, wobei die Rechteverwaltungsinformationen ein Element zum willkürlichen Einstellen eines Rechteverwaltungsverfahrens für die Anwendung und den von der Anwendung angegebenen Inhalt umfassen.

13. Informationsverarbeitungsverfahren nach Anspruch 10, welches umfasst:
Entschlüsseln der Anwendung basierend auf den Rechteverwaltungsinformationen, wobei die Anwendung verschlüsselt ist; und/oder
Verwalten des Kopierens der Anwendung und des angegebenen Inhalts basierend auf den Rechteverwaltungsinformationen.

14. Programm, das einen Computer veranlasst, die Schritte des Informationsverarbeitungsverfahrens nach einem der Ansprüche 10 bis 13 auszuführen, wenn das Programm von dem Computer ausgeführt wird.

## Revendications

1. Dispositif de traitement d'informations, comprenant :
une unité de gestion de contenu, configurée pour gérer un premier contenu visualisable sur un côté d'un dispositif de reproduction de contenu qui reproduit un contenu ;
une unité base de données, configurée pour générer des données de référence et convertir les données de référence générées en une base de données, les données de référence étant générées en associant des premières données de signature extraites du premier contenu à un identifiant de contenu, une information de gestion de droits, un identifiant d'application et une information de contrôle de restitution, l'identifiant de contenu représentant le premier contenu duquel les premières données de signature sont extraites, l'identifiant d'application représentant une application à exécuter sur le côté du dispositif de reproduction de contenu conjointement avec une progression du premier contenu quand le premier contenu est en cours de visualisation sur le côté du dispositif de reproduction de contenu, l'information de contrôle de restitution servant à contrôler la restitution de l'application, et les premières données de signature indiquant une caractéristique du premier contenu ; et
une unité d'identification, configurée pour identifier le contenu et renvoyer une réponse indiquant un résultat d'identification en faisant référence aux données de référence de l'unité base de données en réponse à une requête incluant des secondes données de signature extraites d'un second contenu en cours de visualisation par un utilisateur du dispositif de reproduction de contenu, la requête étant transmise depuis le côté du dispositif de reproduction de contenu, les secondes données de signature indiquant une caractéristique du second contenu.

2. Dispositif de traitement d'informations selon la revendication 1, dans lequel :
les premières données de signature des données de référence sont cryptées, et l'unité base de données est configurée pour décrypter les premières données de signature cryptées par l'intermédiaire d'un processus d'authentification avec l'unité de gestion de contenu.

3. Dispositif de traitement d'informations selon la revendication 1, dans lequel :
l'information de gestion de droits inclut un élément pour sélectionner un procédé de gestion de droits existant pour les premières données de signature, et en particulier inclut en outre un élément pour définir arbitrairement un procédé de gestion de droits pour les premières données de signature.

4. Procédé de traitement d'informations mis en oeuvre dans un dispositif de traitement d'informations,
le procédé de traitement d'informations comprenant :
une étape de formation de base de données, consistant à générer des données de référence et convertir les données de référence générées en une base de données, les données de référence étant générées en associant des premières données de signature extraites d'un premier contenu à un identifiant de contenu, une information de gestion de droits, un identifiant d'application et une information de contrôle de restitution, l'identifiant de contenu représentant le premier contenu duquel les premières données de signature sont extraites, l'identifiant d'application représentant une application à exécuter sur un côté d'un dispositif de reproduction de contenu conjointement avec une progression du premier contenu quand le premier contenu est en cours de visualisation sur le côté du dispositif de reproduction de contenu, l'information de contrôle de restitution servant à contrôler la restitution de l'application, le premier contenu étant visualisable sur le côté du dispositif de reproduction de contenu qui reproduit un contenu, et les premières données de signature indiquant une caractéristique du premier contenu ; et
une étape d'identification consistant à identifier le contenu et renvoyer une réponse indiquant un résultat d'identification en faisant référence aux données de référence de la base de données en réponse à une requête incluant des secondes données de signature extraites d'un second contenu en cours de visualisation par un utilisateur du dispositif de reproduction de contenu, la requête étant transmise depuis le côté du dispositif de reproduction de contenu, les secondes données de signature indiquant une caractéristique du second contenu,
l'étape de formation de base de données et l'étape d'identification étant réalisées par le dispositif de traitement d'informations.

5. Dispositif de traitement d'informations selon la revendication 1, dans lequel :
l'information de contrôle de restitution comprend au moins un élément parmi un élément de limitation d'un dispositif servant de destination de sortie d'une image provenant de l'application, et un élément de restriction d'une superposition d'une image provenant de l'application et d'une image du contenu.

6. Dispositif de traitement d'informations, comprenant :
une unité de génération de requête, configurée pour extraire des données de signature d'un contenu en cours de reproduction, générer une requête incluant les données de signature, transmettre la requête à un serveur d'identification et recevoir une réponse renvoyée par le serveur d'identification en réponse à la requête, les données de signature indiquant une caractéristique du contenu ; et
une unité d'exécution d'application, configurée pour acquérir et exécuter une application sur la base d'un identifiant d'application dans la réponse reçue, l'application étant désignée pour être exécutée conjointement avec une progression du contenu en cours de reproduction, et contrôler la restitution de l'application sur la base d'une information de contrôle de restitution incluse dans la réponse, et gérer l'application et le contenu invoqué par l'application sur la base d'une information de gestion de droits incluse dans la réponse.

7. Dispositif de traitement d'informations selon la revendication 6, dans lequel l'information de gestion de droits comprend un élément pour sélectionner un procédé de gestion de droits existant pour l'application et le contenu invoqué par l'application.

8. Dispositif de traitement d'informations selon la revendication 6, dans lequel l'information de gestion de droits comprend un élément pour définir arbitrairement un procédé de gestion de droits pour l'application et le contenu invoqué par l'application.

9. Dispositif de traitement d'informations selon la revendication 6, dans lequel l'unité d'exécution d'application est configurée pour :
décrypter l'application sur la base de l'information de gestion de droits, l'application étant cryptée, et/ou
gérer la copie de l'application et du contenu invoqué sur la base de l'information de gestion de droits.

10. Procédé de traitement d'informations mis en oeuvre dans un dispositif de traitement d'informations, le procédé de traitement d'informations comprenant :
une étape de transmission, consistant à extraire des données de signature d'un contenu en cours de reproduction, générer une requête incluant les données de signature, et transmettre la requête à un serveur d'identification, les données de signature indiquant une caractéristique du contenu ;
une étape de réception, consistant à recevoir une réponse renvoyée par le serveur d'identification en réponse à la requête ; et
une étape de contrôle ou de gestion, consistant à acquérir et exécuter une application sur la base d'un identifiant d'application dans la réponse reçue, l'application étant désignée pour être exécutée conjointement avec une progression du contenu en cours de reproduction, et contrôler la restitution de l'application sur la base d'une information de contrôle de restitution incluse dans la réponse, et gérer l'application et le contenu invoqué par l'application sur la base d'une information de gestion de droits incluse dans la réponse,
l'étape de transmission, l'étape de réception et l'étape de contrôle ou de gestion étant réalisées par le dispositif de traitement d'informations.

11. Procédé de traitement d'informations selon la revendication 10, dans lequel l'information de gestion de droits comprend un élément pour sélectionner un procédé de gestion de droits existant pour l'application et le contenu invoqué par l'application.

12. Procédé de traitement d'informations selon la revendication 10, dans lequel l'information de gestion de droits comprend un élément pour définir arbitrairement un procédé de gestion de droits pour l'application et le contenu invoqué par l'application.

13. Procédé de traitement d'informations selon la revendication 10, consistant à :
décrypter l'application sur la base de l'information de gestion de droits, l'application étant cryptée ; et/ou
gérer la copie de l'application et du contenu invoqué sur la base de l'information de gestion de droits.

14. Programme amenant un ordinateur à réaliser les étapes du procédé de traitement d'informations selon l'une quelconque des revendications 10 à 13 quand ledit programme est exécuté par l'ordinateur.
